# FASCICULE DE BREVET EUROPEEN

(11) **EP 1 750 026 B1**
(45) Date de publication et mention de la délivrance du brevet: **14.05.2008**
(21) Numéro de dépôt: 06300772.8
(22) Date de dépôt: 06.07.2006
(51) Int. Cl.: F16D 48/04

(54) **Dispositif d'assistance pour la commande hydraulique d'un embrayage, notamment d'un véhicule automobile**
Unterstützungsvorrichtung für hydraulische Kupplungssteuerung, insbesondere eines Kraftfahrzeuges
Assistance device for hydraulic clutch control, specially for a motor vehicle

(30) Priorité: 04.08.2005 FR 0508350
(43) Date de publication de la demande: 07.02.2007
(73) Titulaire: PEUGEOT CITROËN AUTOMOBILES S.A., 78140 Vélizy Villacoublay (FR)
(72) Inventeur: Le Dren, Arnaud, 91230 Montgeron (FR); Goglins, Alix, 77130 La Grande Paroisse (FR); Hervy, Nicolas, 91210 Draveil (FR); Lelasseux, Xavier, 92150 Suresnes (FR)

(56) Documents cités:
- DE-A1- 19 858 271
- FR-A- 2 862 114
- GB-A- 2 264 546

## Description

La présente invention concerne un dispositif d'assistance pour la commande hydraulique d'un embrayage, notamment d'un véhicule automobile.

Les embrayages des véhicules automobiles sont équipés d'un dispositif d'assistance qui permet de réduire l'effort appliqué par un utilisateur sur la pédale d'embrayage, lors de la phase de débrayage.

Le plus souvent l'assistance à la pédale d'embrayage est réalisée par un ressort de compression.

Or, avec l'arrivée dans les véhicules automobiles de motorisation à fort couple, cette assistance devient insuffisante. En effet, le compromis à gérer par le dispositif d'assistance est un effort plus faible à la pédale d'embrayage, un effort minimum au réembrayage et un dosage optimal lors du retour de la pédale d'embrayage.

De plus, l'assistance réalisée par un ressort de compression sur la pédale d'embrayage ne permet pas de compenser les dispersions de production des embrayages. Une fois dimensionné et calibré, le ressort ne peut pas s'adapter à un effort plus ou moins important ou à un retour sur la pédale d'embrayage plus ou moins faible. Le risque vient aussi d'une dispersion dans le positionnement du poids maximum d'effort où l'assistance, dont la loi est dépendante de la course de la pédale d'embrayage, peut être décalée et fournir une assistance trop faible au niveau de ce poids maximum d'effort.

Pour remédier à ces inconvénients, on connaît dans le FR-A-2 862 114, un système de commande d'un embrayage qui comporte un dispositif d'assistance hydraulique.

Ce dispositif d'assistance comprend un circuit hydraulique comportant un cylindre émetteur commandé par une pédale d'embrayage et un cylindre récepteur relié audit cylindre émetteur par une conduite dans laquelle est interposé un cylindre d'assistance comportant un piston double coulissant axialement entre une position d'embrayage et une position de débrayage. Le dispositif comporte également un organe de régulation relié à une source de pression et à un accumulateur de fluide et qui comprend un distributeur à trois positions dont le pilotage est réalisé, d'une part, par la pression du fluide du cylindre émetteur et, d'autre part, par la pression du fluide du cylindre d'assistance.

Le principal inconvénient de ce dispositif réside dans le pilotage du distributeur en cas de variation de la pression d'alimentation, et donc de la pression d'assistance. Le pilotage du distributeur à trois positions est réalisé d'une part par la pression du fluide du cylindre émetteur et d'autre part par la pression du fluide du cylindre d'assistance. Toute variation de la pression d'assistance entraîne des dysfonctionnements dans le pilotage du distributeur.

L'invention a pour but de proposer un dispositif d'assistance proportionnelle à l'effort pour la commande hydraulique d'un embrayage qui est insensible aux variations de la source de pression.

L'invention a donc pour objet un dispositif d'assistance pour la commande hydraulique d'un embrayage, notamment d'un véhicule automobile, du type comprenant un circuit hydraulique comportant :
- un cylindre émetteur commandé par une pédale d'embrayage,
- un cylindre récepteur relié audit cylindre émetteur par une conduite dans laquelle est interposé un cylindre d'assistance comportant un piston double coulissant axialement entre une position d'embrayage et une position de débrayage, et
- un organe de régulation relié à une source de pression et à un accumulateur de fluide et comprenant un distributeur formé par un tiroir déplaçable par coulissement pour faire varier la valeur de la force d'assistance sur le piston double proportionnellement à l'effort exercé sur la pédale d'embrayage,
caractérisé en ce que le déplacement du tiroir du distributeur est piloté, d'une part, par la pression du fluide du cylindre émetteur et, d'autre part, par la pression du fluide du cylindre récepteur.

Selon d'autres caractéristiques de l'invention :
- un système de démultiplication est interposé entre le distributeur et le cylindre récepteur,
- la section du tiroir du distributeur du côté de la pression du fluide du cylindre émetteur est plus grande que la section dudit tiroir du côté de la pression du fluide du cylindre récepteur,
- le piston double du cylindre d'assistance, le tiroir du distributeur et l'accumulateur sont logés dans un même ensemble monobloc,
- l'ensemble monobloc comprend un premier logement cylindrique pour le piston double et un second logement cylindrique pour le tiroir, lesdits logements s'étendant parallèlement l'un par rapport à l'autre, et
- le premier logement comporte un premier orifice d'extrémité relié au cylindre émetteur et un second orifice d'extrémité relié au cylindre récepteur et le second logement comporte une première extrémité reliée par un passage au premier orifice d'extrémité du premier logement et une seconde extrémité reliée par un passage au second orifice d'extrémité du premier logement, lesdits passages étant ménagés dans ledit ensemble monobloc.

L'invention sera mieux comprise à la lecture de la description qui va suivre, donnée à titre d'exemple et faite en référence aux dessins annexés, sur lesquels :
- la Fig. 1 représente un schéma du dispositif d'assistance, conforme à l'invention, en position de repos,
- les Figs. 2 et 3 représentent deux schémas du dispositif d'assistance, conforme à l'invention, respectivement en position d'équilibre et en position de débrayage, et
- la Fig. 4 est une vue schématique en coupe axiale d'un ensemble monobloc contenant le cylindre d'assistance ainsi que l'organe de régulation du dispositif d'assistance, conforme à l'invention.

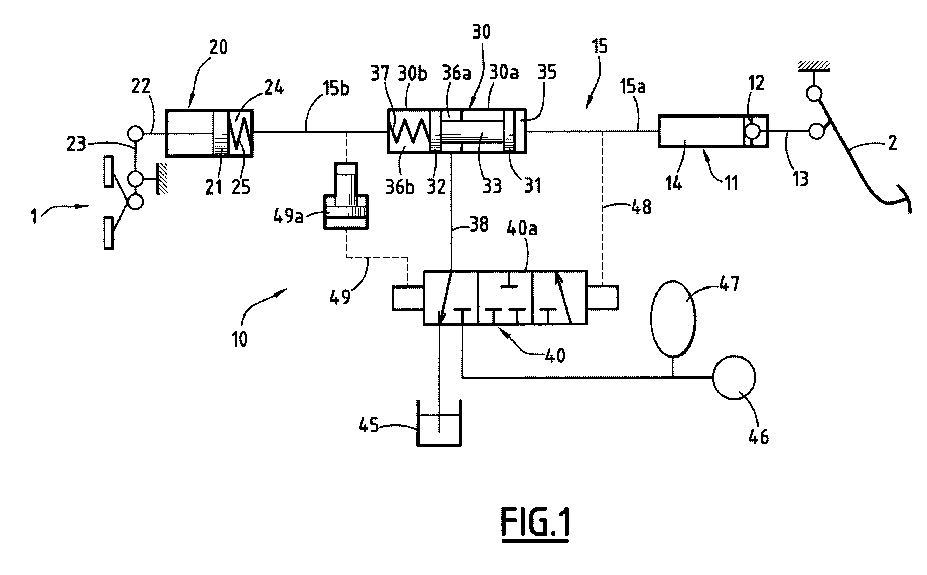

Sur la Fig. 1, on a représenté schématiquement un dispositif d'assistance pour la commande hydraulique d'un embrayage 1 au moyen d'une pédale d'embrayage 2.

Le dispositif d'assistance désigné par la référence générale 10 comprend un circuit hydraulique comportant un cylindre émetteur 11 muni, de manière classique, d'un piston 12 relié à la pédale d'embrayage 2 par une tige de liaison 13. Le piston 12 est monté mobile axialement à l'intérieur du corps du cylindre émetteur 11 et délimite une chambre 14 de volume variable reliée par une conduite 15 à un cylindre récepteur désigné par la référence générale 20.

Ce cylindre récepteur 20, comprend, de manière classique, un piston 21 relié par une tige 22 à une fourchette 23 de commande de l'embrayage
1. Le piston 21 est déplaçable axialement dans le cylindre récepteur 20 et délimite une chambre 24 dans laquelle débouche le conduit 15.

Un ressort de compression 25 est placé dans la chambre 24 et agit sur le piston 21 dans le sens de commande de l'embrayage 1.

Dans la conduite 15 reliant la chambre 14 du cylindre émetteur 11 à la chambre 24 du cylindre récepteur 20, est interposé un cylindre d'assistance désigné par la référence générale 30.

Ce cylindre d'assistance 30 comporte un piston double formé par un premier piston 31 et un second piston 32 relié entre eux par une tige 33. Le cylindre d'assistance 30 est divisé en deux parties, une première partie 30a dans laquelle se déplace par coulissement axial le premier piston 31 et une seconde partie 30b dans laquelle se déplace par coulissement axial le second piston 32. Le premier piston 31 délimite, dans la première partie 30a du cylindre d'assistance 30, une chambre 35 dans laquelle débouche une portion 15a de la conduite 15 reliant le cylindre émetteur 11 et le cylindre d'assistance 30 et le second piston 32 délimite, dans la seconde partie 30b, une première chambre 36a et une seconde chambre 36b dans laquelle débouche une seconde portion 15b de la conduite 15 reliant cette seconde chambre 36b avec la chambre 24 du cylindre récepteur 20. Un ressort de compression 37 est interposé entre le piston 32 et le fond de la chambre 36b.

Le circuit hydraulique du dispositif d'assistance comprend également un organe de régulation désigné par la référence générale 40.

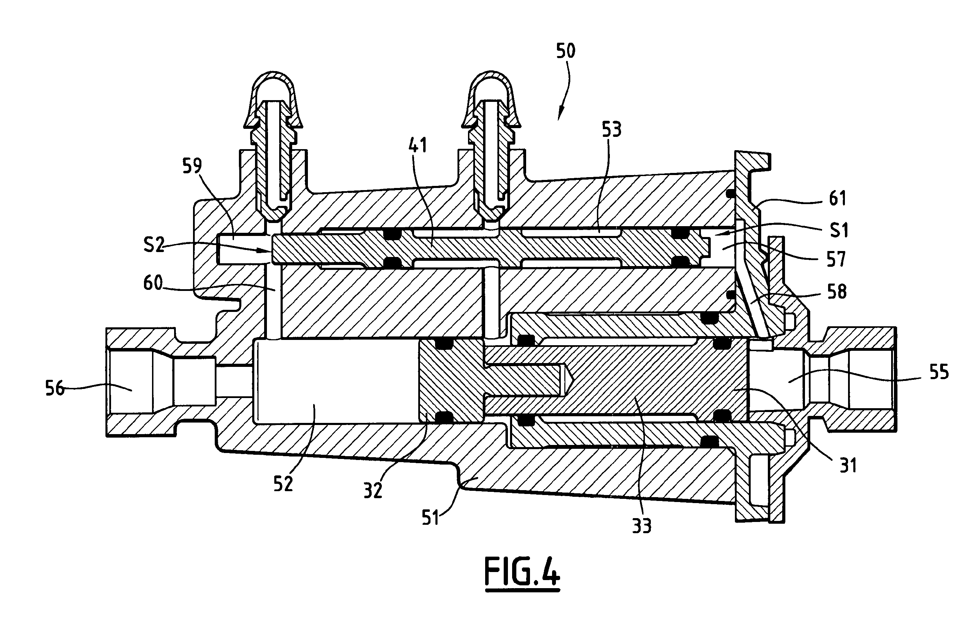

Cet organe de régulation 40 comprend un distributeur 40a formé par un tiroir 41 (Fig. 4) déplaçable par coulissement pour faire varier la valeur de la force d'assistance sur le piston double 31 et 32 du cylindre d'assistance 30 proportionnellement à l'effort exercé sur la pédale d'embrayage 2.

Le distributeur 40a est raccordé à un réservoir sous pression 45 ainsi qu'à une source de pression 46 et à un accumulateur 47.

Ce distributeur 40a est relié à la première chambre 36a de la seconde partie 30b du cylindre d'assistance 30 par un conduit de liaison 38.

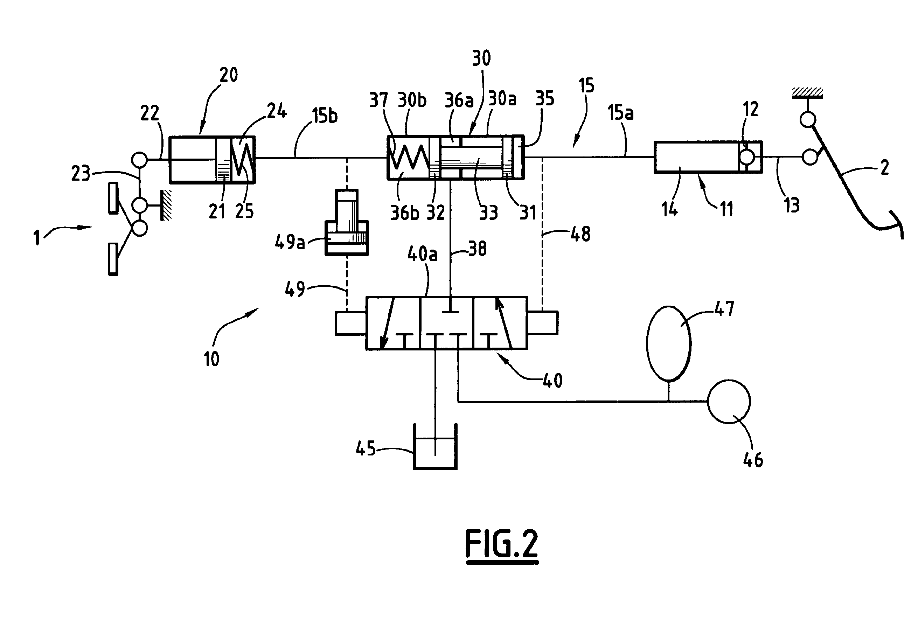

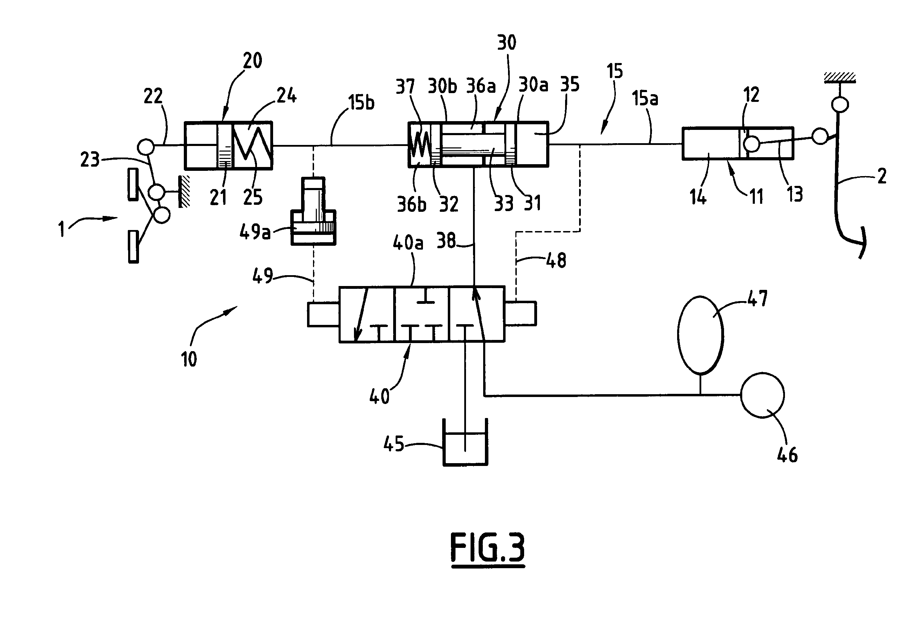

Le tiroir 41 du distributeur 40 est déplaçable entre trois positions, une première position dite de repos ou de décharge (Fig. 1) permettant le passage du fluide du cylindre d'assistance 30 vers le réservoir de fluide 45, une seconde position dite position d'équilibre ou intermédiaire (Fig. 2) qui correspond à la position fermée du distributeur (40) et une troisième position dite position de charge (Fig. 3) permettant le passage du fluide de l'accumulateur du fluide 47 vers le cylindre d'assistance 30.

A cet effet, le déplacement par coulissement du tiroir 41 du distributeur 40a est piloté, d'une part, par la pression du fluide du cylindre émetteur 11 et, d'autre part, par la pression du fluide du cylindre récepteur 20. A cet effet, le distributeur 40a est relié par un conduit 48 à la portion 15a du conduit 15 située entre le cylindre émetteur 11 et le cylindre d'assistance 30 et par un conduit 49 à la portion 15b du conduit 15 située entre le cylindre récepteur 21 et le cylindre d'assistance 30.

De préférence, un système de démultiplication 49a de la pression du fluide, de type connu, est disposé sur le conduit 49 entre le distributeur 40a et le cylindre récepteur 20.

Afin de piloter les déplacements du tiroir 41 du distributeur 40a, il est nécessaire d'avoir des efforts de part et d'autre de ce tiroir 41, de même intensité. Or, la pression du fluide provenant du cylindre émetteur 11 est plus faible que la pression du fluide provenant du cylindre récepteur 20, car l'effort sur la face du coté de ce cylindre émetteur 11 dans le piston double 31 et 32 résulte de la soustraction de l'effort d'assistance à l'effort sur la face dudit piston double 31 et 32 du coté du cylindre récepteur 20.

Les pressions du côté du cylindre émetteur 11 et du côté du cylindre récepteur 20 étant donc différentes, le pilotage du tiroir 41 du distributeur 40a nécessite des surfaces de pilotage différentes afin d'avoir des efforts de pilotage identiques. A cet effet, la section S1 de ce tiroir 41 du côté de la pression du cylindre émetteur 11 est plus grande que la section S2 dudit tiroir 41 du coté de la pression du cylindre récepteur 20 ainsi que montré à la Fig. 4.

Lorsque l'effort demandé du coté du cylindre émetteur 11 est inférieur à l'effort du coté du cylindre récepteur 20, le distributeur 40a occupe sa position de décharge, comme montrée à la Fig. 1.

Lorsque les deux efforts, c'est à dire du côté du cylindre émetteur 11 et du coté du cylindre récepteur 20 sont égaux, le distributeur 40a occupe sa position intermédiaire d'équilibre, comme montrée à la Fig. 2.

Enfin, lorsque l'effort de commande du côté du cylindre émetteur 11 est supérieur à l'effort du coté du cylindre récepteur 20, le distributeur 40a occupe sa position de charge, comme montrée à la Fig. 3.

Le dispositif d'assistance selon l'invention permet donc de réaliser une régulation proportionnelle de la force d'assistance.

Le contrôle de l'assistance en pression par l'intermédiaire du distributeur 40a, permet de fixer un ratio et ainsi fournir une assistance proportionnelle à l'effort dans la commande.

Ce type d'assistance permet de démultiplier l'effort suivant un coefficient constant, sans modifier les volumes de fluide transférés.

Si le ratio de la section de pilotage S2 sur la section de pilotage S1 du taux 41 du distributeur 40a est identique au ratio de la pression dans la chambre 14 du cylindre émetteur 11 sur la pression dans la chambre 24 du cylindre récepteur 20, l'assistance réalise la moitié de l'effort appliqué au cylindre récepteur 20. Le niveau d'assistance peut varier en faisant varier la différence entre les surfaces de pilotage S1 et S2 du tiroir 41 du distributeur 40a.

Selon un mode de réalisation préférentiel, le piston double 31 et 32 du cylindre d'assistance 30, le tiroir 41 du distributeur 40a ainsi que l'accumulateur 47 sont logés dans un même ensemble monobloc désigné par la référence générale 50 et représenté à la Fig. 4. Sur cette figure l'accumulateur 47 n'apparaît pas dans le plan de coupe.

Cet ensemble monobloc 50 comporte un corps 51 comprenant un premier logement cylindrique 52 pour le piston double 31 et 32 et un second logement 53 pour le tiroir 41 du distributeur 40a. Ces logements 52 et 53 s'étendant parallèlement l'un par rapport à l'autre.

Le premier logement 52 du piston double 31 et 32 comporte un premier orifice d'extrémité 55 relié au cylindre émetteur 11 et un second orifice d'extrémité 56 relié au cylindre récepteur 20. Le second logement 53 du tiroir 41 comporte une première extrémité 57 reliée par un passage 58 au premier orifice d'extrémité 55 du premier logement 52 et une seconde extrémité 59 reliée par un passage 60 au second orifice 56 du premier logement 52.

Selon un mode de réalisation préférentiel, l'ensemble monobloc 50 comporte également un couvercle 61 fixé sur le corps 51 par des moyens appropriés et qui ferment d'un côté les logements cylindriques 52 et 53.

L'orifice 55 du premier logement 52 et le passage 58 sont ménagés dans ce couvercle 61.

Cette disposition permet de réduire de manière importante l'encombrement d'un tel dispositif d'assistance ainsi que son coût de réalisation du fait du faible nombre de pièces.

Dans le cas où la source de fluide sous pression est utilisée pour différentes fonctions, comme par exemple une direction assistée ou les suspensions, il est nécessaire que le fonctionnement de l'assistance ne perturbe pas le fonctionnement normal des autres systèmes utilisant la source de pression.

Ainsi, l'alimentation de l'assistance par la source de pression est régulée par un limiteur de débit de type classique. Cette restriction permet de recharger l'accumulateur uniquement lorsque la pression est suffisante pour le fonctionnent des autres organes utilisant la source de pression. Le limiteur de débit est dimensionné pour assurer un certain nombre de débrayages successifs à réaliser. Ce fonctionnement permet, par exemple, de ne pas faire varier le débit et donc le niveau d'assistance utilisé par la direction assistée lors de manoeuvres où la commande d'embrayage est beaucoup sollicitée.

## Revendications

1. Dispositif d'assistance pour la commande hydraulique d'un embrayage (1), notamment d'un véhicule automobile, du type comprenant un circuit hydraulique comportant :
- un cylindre émetteur (11) commandé par une pédale d'embrayage (2),
- un cylindre récepteur (20) relié audit cylindre émetteur (11) par une conduite (15) dans laquelle est interposé un cylindre d'assistance (30) comportant un piston double (31, 32) coulissant axialement entre une position d'embrayage et une position de débrayage, et
- un organe de régulation (40) relié à une source de pression (46) et à un accumulateur de fluide (47) et comprenant un distributeur (40a), formé par un tiroir (41) déplaçable par coulissement pour faire varier la valeur de la force d'assistance sur le piston double (31, 32) proportionnellement à l'effort exercé sur la pédale d'embrayage (2),
**caractérisé en ce que** le déplacement du tiroir (41) du distributeur (40a) est piloté, d'une part, par la pression du fluide du cylindre émetteur (11) et, d'autre part, par la pression du fluide du cylindre récepteur (20).

2. Dispositif selon la revendication 1, **caractérisé en ce qu**'un système de démultiplication (49a) est interposé entre le distributeur (40a) et le cylindre récepteur (20).

3. Dispositif selon la revendication 1 ou 2, **caractérisé en ce que** la section S1 du tiroir (41) du distributeur du côté de la pression du fluide du cylindre émetteur (11) est plus grande que la section S2 dudit tiroir (41) du coté de la pression du fluide du cylindre récepteur (20).

4. Dispositif selon l'une quelconque des revendications 1 à 3, **caractérisé en ce que** le piston double (31, 32) du cylindre d'assistance (30), le tiroir (41) du distributeur (40a) et l'accumulateur (47) sont logés dans un même ensemble monobloc (50).

5. Dispositif selon la revendication 4, **caractérisé en ce que** l'ensemble monobloc (50) comprend un premier logement cylindrique (52) pour le piston double (31, 32) et un second logement cylindrique (53) pour le tiroir (41), lesdits logements (52, 53) s'étendant parallèlement l'un par rapport à l'autre.

6. Dispositif suivant la revendication 5, **caractérisé en ce que** le premier logement (52) comporte un premier orifice d'extrémité (55) relié au cylindre émetteur (11) et un second orifice d'extrémité (56) relié au cylindre récepteur (20) et le second logement (53) comporte une première extrémité (57) reliée par un passage (58) au premier orifice d'extrémité (55) du premier logement (52) et une seconde extrémité (59) reliée par un passage (60) au second orifice d'extrémité (56) du premier logement (52), lesdits passages (58) et (60) étant ménagés dans ledit ensemble monobloc (50).

## Claims

1. Assistance device for the hydraulic control of a clutch (1), in particular of a motor vehicle, of the type comprising a hydraulic circuit including:
- a transmitter cylinder (11) controlled by a clutch pedal (2),
- a receiver cylinder (20) connected to the said transmitter cylinder (11) by a line (15) in which there is interposed an assistance cylinder (30) comprising a double piston (31, 32) sliding axially between a clutch engagement position and a clutch release position, and
- a regulating member (40) connected to a pressure source (46) and to a fluid accumulator (47) and comprising a distributor (40a) formed by a slide valve (41) which can be displaced by sliding so as to vary the value of the assistance force on the double piston (31, 32) proportionally to the effort exerted on the clutch pedal (2),
**characterized in that** the displacement of the slide valve (41) of the distributor (40a) is controlled, on the one hand, by the pressure of the fluid of the transmitter cylinder (11) and, on the other hand, by the pressure of the fluid of the receiver cylinder (20).

2. Device according to Claim 1, **characterized in that** a reduction system (49a) is interposed between the distributor (40a) and the receiver cylinder (20).

3. Device according to Claim 1 or 2, **characterized in that** the cross section S1 of the slide valve (41) of the distributor on the pressure side of the fluid of the transmitter cylinder (11) is larger than the cross section S2 of the said slide valve (41) on the pressure side of the fluid of the receiver cylinder (20).

4. Device according to any one of Claims 1 to 3, **characterized in that** the double piston (31, 32) of the assistance cylinder (30), the slide valve (41) of the distributor (40a) and the accumulator (47) are housed in the same one-piece unit (50).

5. Device according to Claim 4, **characterized in that** the one-piece unit (50) comprises a first cylindrical housing (52) for the double piston (31, 32) and a second cylindrical housing (53) for the slide valve (41), the said housings (52, 53) extending parallel to one another.

6. Device according to Claim 5, **characterized in that** the first housing (52) has a first end orifice (55) connected to the transmitter cylinder (11) and a second end orifice (56) connected to the receiver cylinder (20), and the second housing (53) has a first end (57) connected by a passage (58) to the first end orifice (55) of the first housing (52) and a second end (59) connected by a passage (60) to the second end orifice (56) of the first housing (52), the said passages (58) and (60) being formed in the said one-piece unit (50).

## Patentansprüche

1. Hilfsvorrichtung für die hydraulische Steuerung einer Kupplung (1), insbesondere eines Kraftfahrzeugs, von dem Typ, der einen Hydraulikkreis enthält, der aufweist:
- einen Sendezylinder (11), der von einem Kupplungspedal (2) gesteuert wird,
- einen Empfangszylinder (20), der mit dem Sendezylinder (11) über eine Leitung (15) verbunden ist, in die ein Hilfszylinder (30) eingefügt ist, der einen Doppelkolben (31, 32) aufweist, der axial zwischen einer Kupplungsstellung und einer Auskupplungsstellung gleitet, und
- ein Regulierungsorgan (40), das mit einer Druckquelle (46) und mit einem Fluidspeicher (47) verbunden ist und einen Verteiler (40a) aufweist, geformt von einem Schieber (41), der durch Gleiten verschiebbar ist, um die Größe der Hilfskraft auf den Doppelkolben (31, 32) proportional zu der Kraft variieren zu lassen, die auf das Kupplungspedal (2) ausgeübt wird,
**dadurch gekennzeichnet, dass** die Verschiebung des Schiebers (41) des Verteilers (40a) einerseits durch den Druck des Fluids des Sendezylinders (11) und andererseits durch den Druck des Fluids des Empfangszylinders (20) gesteuert wird.

2. Vorrichtung nach Anspruch 1, **dadurch gekennzeichnet, dass** ein Untersetzungssystem (49a) zwischen den Verteiler (40a) und den Empfangszylinder (20) eingefügt ist.

3. Vorrichtung nach Anspruch 1 oder 2, **dadurch gekennzeichnet, dass** der Querschnitt S1 des Schiebers (41) des Verteilers auf der Seite des Drucks des Fluids des Sendezylinders (11) größer ist als der Querschnitt S2 des Schiebers (41) auf der Seite des Drucks des Fluids des Empfangszylinders (20).

4. Vorrichtung nach einem der Ansprüche 1 bis 3, **dadurch gekennzeichnet, dass** der Doppelkolben (31, 32) des Hilfszylinders (30), der Schieber (41) des Verteilers (40a) und der Speicher (47) in der gleichen einstückigen Einheit (50) angeordnet sind.

5. Vorrichtung nach Anspruch 4, **dadurch gekennzeichnet, dass** die einstückige Einheit (50) eine erste zylindrische Aufnahme (52) für den Doppelkolben (31, 32) und eine zweite zylindrische Aufnahme (53) für den Schieber (41) aufweist, wobei die Aufnahmen (52, 53) sich zueinander parallel erstrecken.

6. Vorrichtung nach Anspruch 5, **dadurch gekennzeichnet, dass** die erste Aufnahme (52) eine erste Endöffnung (55), die mit dem Sendezylinder (11) verbunden ist, und eine zweite Endöffnung (56) aufweist, die mit dem Empfangszylinder (20) verbunden ist, und die zweite Aufnahme (53) ein erstes Ende (57), das über einen Durchgang (58) mit der ersten Endöffnung (55) der ersten Aufnahme (52) verbunden ist, und ein zweites Ende (59) aufweist, das über einen Durchgang (60) mit der zweiten Endöffnung (56) der ersten Aufnahme (52) verbunden ist, wobei die Durchgänge (58) und (60) in derselben einstückigen Einheit (50) eingerichtet sind.
